# EUROPEAN PATENT SPECIFICATION

(11) **EP 0 703 703 B1**
(45) Date of publication and mention of the grant of the patent: **13.10.2004**
(21) Application number: 95203154.0
(22) Date of filing: 18.02.1993
(51) Int. Cl.: H04N 5/14, H04N 5/232

(54) **Movement vector detecting device**
Vorrichtung zur Detektion von Bewegungsvektoren
Dispositif de détection de vecteur de mouvement

(30) Priority: 21.02.1992 JP 3459692
(43) Date of publication of application: 27.03.1996
(62) Divisional of application: 93301198.3
(73) Proprietor: CANON KABUSHIKI KAISHA, Tokyo (JP)
(72) Inventor: Kondo, Toshiaki, c/o Canon K.K., Tokyo (JP); Sekine, Masayoshi, c/o Canon K.K., Tokyo (JP)
(74) Representative: Beresford, Keith Denis Lewis

(56) References cited:
- EP-B- 0 557 095
- IEEE TRANSACTIONS ON CONSUMER ELECTRONICS, vol. 37, no. 3, August 1991 NEW YORK US, pages 521-529, JOON KI PAIK ET AL 'an edge detection approach to digital image stabilization based on tri-state adaptive linear neurons'
- Visser : "The Annotated European Patent Convention", fifth revised edition updated till 31 December 1997; printed by Copynomie, Veldhoven, NL.

## Description

### BACKGROUND OF THE INVENTION

### Field of the Invention

The present invention relates to a movement vector detecting device, and more particularly to a device for detecting a movement vector from an image signal.

### Related Background Art

The movement vector detecting device has been employed in the image encoding device or the image vibration compensating device. For movement vector detection by image signal processing, there have been known a time-space inclination method disclosed for example in the U.S. Patent No. 3,890,462 and in the Japanese Patent Publication No. 60-46878, a correlation method based on calculation of correlation, and a block matching method.

In the time-space inclination method, the amount of movement is calculated from the difference d in luminance between frames (or fields) and the difference Δ between pixels in a frame. There is utilized a property that the image signal of a moving image is an average in time with a field cycle time, and that the edge becomes less sharp and the difference Δ in luminance among pixels becomes smaller as the amount of movement of image becomes larger. The amount of movement is defined by d/Δ, namely the difference d in luminance among frames or fields, normalized by the difference Δ in luminance among pixels. The details of the time-space inclination method are described by B. K. P. Horn et al., Artificial Intelligence 17, p.185 - 203 (1981).

The block matching method consists of dividing the input image signal into blocks of a suitable size (for example 8 pixels by 8 lines), comparing each block with the pixels of a predetermined area in a preceding frame (or field) and determining the most resembling position by laterally moving the comparing position within the image frame. For example there is searched a position where the sum, within the block, of absolute difference of pixels between the frames (or fields), and the movement vector is represented by the relative displacement of the most resembling blocks. The details of the block matching calculation are reported by M. Ogami et al., Information Processing, Vol. 17, No. 7, p.634 - 640 July, 1976.

In these methods, however, it has been difficult to exactly detect the movement vector, or the detected movement vector has not been reliable, in case the unit block for movement vector detection contains only low spatial frequencies and lacks characteristic pattern (such as sky, water surface, white wall or asphalt surface), or in case said unit block contains a plurality of similar characteristic points with a high spatial frequency (such as flower field, leaves of a tree or a door with grid pattern), or in case an object having the edge only in a specified direction (such as an oblong rod) moves along the direction of said edge.

If a high-efficiency image encoding device or an image vibration compensating device is operated according to an erroneous movement vector or a movement vector involving a large error, the precision of encoding or compensation is significantly deteriorated, and the image quality may become even worse by such encoding or compensation.

In the field of vibration detection and vibration compensation utilising the movement vector, the present applicant already has the following granted US patents:

U.S. Patents Nos. 5,198,896, 5,189,513, 5,296,925, 4,965,892, 5,012,270 and 5,107,293.

An article entitled IEEE Transactions on Consumer Electronics, vol. 37, No. 3, August 1991; pages 521-529; Pik et al.: "An Edge Detection Approach to Digital Image Stabilisation based on Tri-state adaptive linear Neurons" discloses a video camera having means for detecting, and compensating for, motion.

The present invention is to resolve the above-mentioned drawbacks of the prior art, and is concerned with providing a movement vector detecting device capable of accurately detecting the movement regardless of the state of the image.

The present invention is also concerned with providing an image pickup device capable of accurately detecting the movement vector of an object image regardless of the pattern thereof, and enabling the realisation of optimum movement compensating characteristics without erroneous operations.

The present invention is additionally concerned with providing a camera constantly capable of accurate compensation for vibration regardless of the state of the object to be photographed.

In accordance with the present invention there is provided an image pick-up device as set out in claim 1, and a method of picking up an image as set out in claim 3.

Still other features of the present invention will become fully apparent from the following description to be taken in conjunction with the attached drawings, which are given by way of example.

### BRIEF DESCRIPTION OF THE DRAWINGS

Fig. 1 is a block diagram of an embodiment of the present invention;
Fig. 2 is a view showing the relation between the spatial frequency and binary patterns;
Figs. 3A and 3B are views for explaining binary patterns;
Fig. 4 is a chart showing an example of the evaluation function;
Figs. 5A to 5C are charts showing the principle of edge detection by the zero crossing method; and
Fig. 6 is a view showing a binary pattern having edges periodically on a vertical line.

### DETAILED DESCRIPTION OF THE PREFERRED EMBODIMENTS

Now the present invention will be clarified in detail by an embodiment thereof shown in the attached drawings.

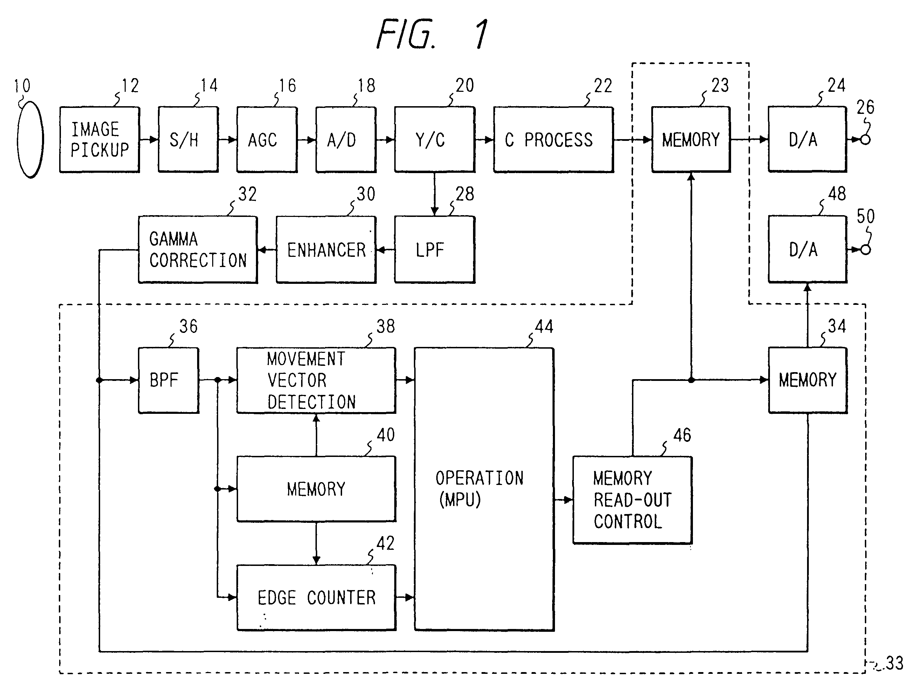

Fig. 1 is a block diagram of a video camera with an antivibration devices, constituting an embodiment of the present invention. In this embodiment, the vibration of image is suppressed by storing the phototaken image signal of an image frame in an image memory, and controlling the read-out range from said image memory according to the detected movement vector.

In Fig. 1, an image pickup device 12 converts an object image, formed by a phototaking lens 10, into an electrical signal. In the present embodiment, the image pickup device 12 releases a line-sequential color difference image signal. The output of said image pickup device 12 is supplied, through a sample hold (S/H) circuit 14, to an AGC (automatic gain control) circuit 16. Which automatically regulates the gain of the output signal of the S/H circuit 14 and of which output is converted into a digital signal by an A/D converting circuit 18.

A Y/C separation circuit 20 is composed of two 1H delay lines and an adder for adding the input and a 2H delayed signal. The output of said adder is supplied to a C process circuit 22 constituting a color signal processing circuit, while a 1H delayed signal is supplied to a lowpass filter (LPF) 28 of a luminance signal processing system. The C process circuit 22 generates a chroma signal from the output of the Y/C separation circuit 20, and its output is temporarily stored in a memory 23 in an image vibration suppressing circuit 33 to be explained later.

In the luminance signal processing system, the LPF 28 eliminates the carrier component of the line-sequential color difference signal, from the signal supplied from the Y/C separation circuit 20. The output of the LPF 28 is supplied to an enhancer 30 for edge enhancement. The enhancer 30 normally adds, to the input signal, a secondary differentiated signal thereof. A gamma correction circuit 32 avoids the saturation in the high-light area and widens the dynamic range, on the output of the enhancer 30. The ordinary luminance signal process is completed in this manner, and the output of the gamma correction circuit is supplied to the image vibration suppressing circuit 33.

In said image vibration suppressing circuit 33, the output of the gamma correction circuit 32 is supplied to a field (or frame) memory 34 and a band-pass filter (BPF) 36 consisting of a spatial frequency filter. A memory 34 temporarily stores the entered luminance signal. The BPF 36 extracts, from the output of the gamma correction circuit 32, spatial frequency components useful for movement vector detection. Thus the low and high spatial frequency components are eliminated from the image signal.

In the present invention, the BPF 36 releases the code bit of the digital output signal of the gamma correction circuit 32. This corresponds to the binarization of the luminance signal, employing the DC level as the threshold value. Thus, the circuits succeeding to the BPF 36 can be composed of 1-bit processing system and can therefore be compactized.

The output of the BPF is supplied to a movement vector detecting circuit 38, a memory 40 serving as 1-field time delay means and an edge counter 42. Said movement vector detecting circuit 38 also receives the signal of the preceding field from the memory 40, and detects the movement vector by the calculation according to the time-space inclination method or by the correlation calculation, based on the current field and the preceding field.

The edge counter 42 counts the number of edges in the horizontal and vertical directions contained in each unit block for movement vector detection in the movement vector detecting circuit 38. More specifically, it detects the inversion of output of the BPF 36, by taking exclusive logic sum between the neighboring pixels.

The movement vector (horizontal and vertical components) detected by the movement vector detecting circuit 38, and the number of edges in each block, detected by the edge counter 42, are supplied to an operation circuit 44 composed of a microcomputer, which evaluates the reliability of the movement vector in each block, by the number of edges in the same block. More specifically, the movement vectors respectively detected in the blocks constituting the detection units for the movement vector are weighted by the number of detected edges, and the movement vector for the entire image frame is detected, as will be explained later in more details.

The operation circuit 44 supplies the calculated movement vector to a memory read-out control circuit 46, which, in response, controls read-out control circuit 46, which, in response, controls the read-out positions of the memories 23, 34 so as to cancel the image movement.

The chroma signal read from the memory 23 is converted into an analog signal by a D/A converter 24, and is released from an output terminal 26. Also the luminance signal read from the memory 34 is converted into an analog signal by a D/A converter 48, and is released from an output terminal 50. In this manner, the image signal with suppressed image vibration is released from said output terminals. 26, 50.

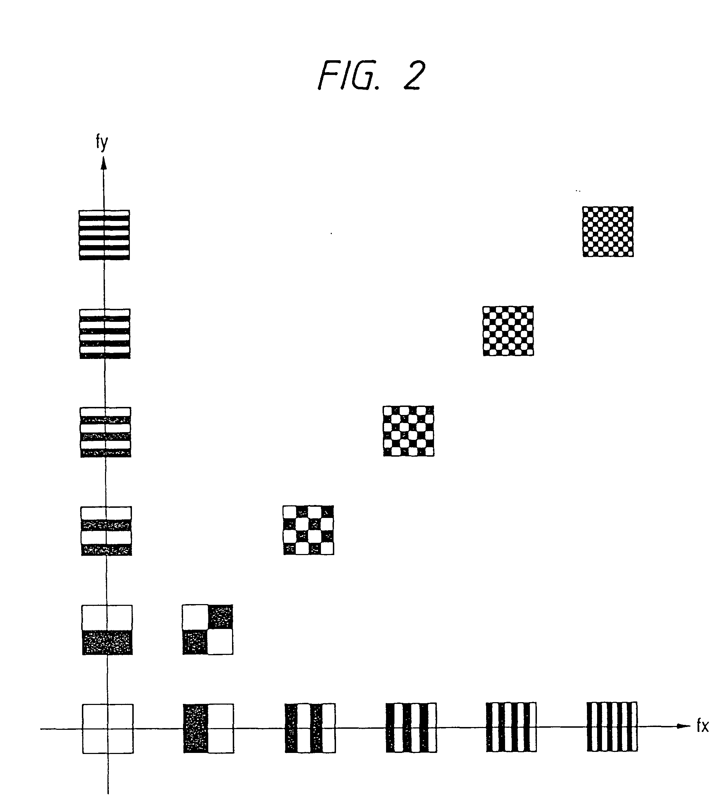

In the following there will be given a detailed explanation on the calculation in the operation circuit 44, namely the evaluation of reliability of the movement vector, with reference to Figs. 2, 3A, 3B and 4. Fig. 2 shows an orthogonal coordinate system representing the spatial frequency area, wherein the abscissa fx indicates the horizontal spatial frequency while the ordinate indicates the vertical spatial frequency. Pattern shown on the coordinate system indicates a binary pattern corresponding to the spatial frequency of the illustrated position. In general, the spatial frequency distribution of an image assumes a cross-shape pattern with limited diagonal components.

In the movement vector in general, the component of movement in a direction orthogonal to the direction of edge (tangential direction) of the image can be detected with satisfactory precision, but the component in the direction of edge is difficult to detect, with low reliability of detected value. Also in the direction orthogonal to the edge, the reliability becomes low if the periodical pattern exists in said direction, because of the possibility of mismatching.

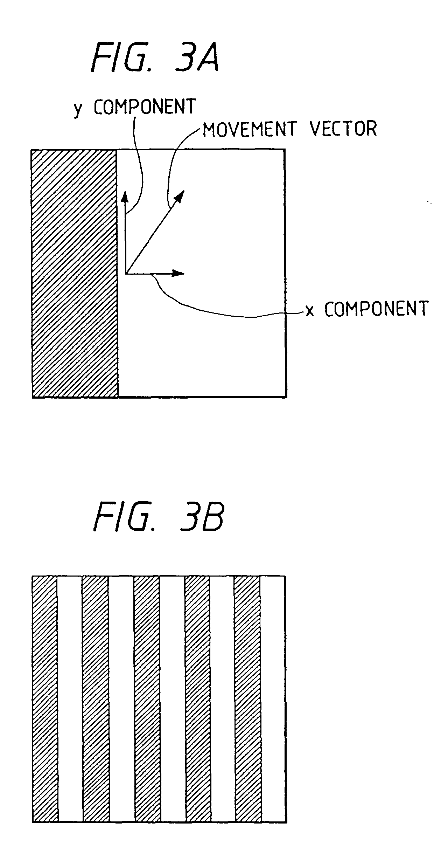

For example, in case of an edge extending in the vertical (y) direction, the x component of the movement vector is detectable, but y component is not detectable. In case of a rough pattern as shown in Fig. 3A, with a block size of 10 x 10 pixels, there are observed 10 edges in the x-direction and 0 edges in the y-direction. In such case, the detected value of y-component of the movement vector is unreliable.

Also in case of a pattern shown in Fig. 3B, with a higher spatial frequency with periodicity in the x-direction, the detected value in the y-direction is unreliable because there is no edge in the y-direction as in the case of Fig. 3A. The reliability becomes also low in the x-direction, because of the possible mismatching resulting from the periodicity. If a block size of 10 x 10 pixels is employed for the pattern of Fig. 3B, there are obtained 90 (= 9 x 10) edges in the x-direction and 0 edge in the y-direction. The detected value in the x-direction is unreliable because of too many edges, and the detected value in the y-direction is also unreliable because of absence of edge.

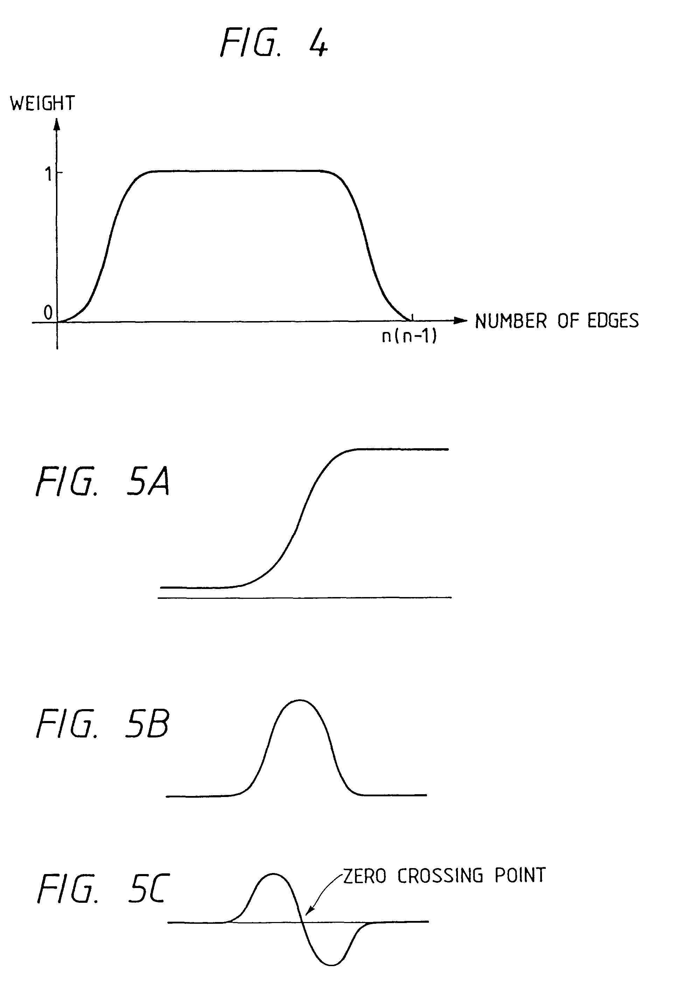

Fig. 4 shows an example of the weighting function (evaluating function) for the number of detected edges, wherein n indicates the block size in the x- and y-directions. The maximum number of edges in a block of n x n pixels is n(n - 1). When the number of edges is close to zero, the evaluation is low because the effective information for movement vector detection is deficient. On the other hand, the evaluation is also low if the number of edges is very large, because mismatching can happen easily. The operation circuit 44 evaluates the x- and y-components of the detected movement vectors, individually utilizing said weighting function, and effects a process of averaging similar movement vectors with weights in a closed output area and eliminating the movement vectors of low reliability.

In the foregoing embodiment, the edge is judged from a particular spatial frequency component extracted by the two-dimensional BPF 36, but it is naturally possible also to count the edges of boundaries or contours by extracting edge information from multi-value image signal. Direct edge detection from the luminance signal can be achieved by the zero-crossing method, in which the edge is detected by secondary differentiation of the luminance signal, as detailedly reported by D. Marr and E. Hildreth in "Theory of Edge Detection", Proceeding of the Roval Society of London, B207, 1980, pp187 - 217.

Fig. 5A shows an edge part of an image, while Fig. 5B shows a differential of the signal shown in Fig. 5A, and Fig. 5C shows a differential of the signal shown in Fig. 5B, or a second-order differential of the signal shown in Fig. 5A. The wave form of said second-order differential shown in Fig. 5C inverts the sign at the center of the edge, and said sign inverting point is called zero crossing point. Thus the edges can be detected in the horizontal and vertical directions, by effecting second-order differentiation in said directions. The reliability of the detected movement vector can be evaluated also by the edges detected by such zero crossing method.

There have also been proposed other types of edge detectors, which are likewise applicable to the present invention. For example there are already known Roberts' edge detector reported by L. G. Roberts, "machine perception of three-dimensional solids", in Optical and Electro-optical Information Processing, and J. T. Tippett et al. (eds,), MIT Press, Cambridge, Mass., 1965, pp.159 - 197, and Prewitt's edge detector reported by J. M. S. Prewitt, "object enhancement and extraction" in Picture Processing and Psychopictorics; and B. S. Lipkine and A. Rosenfeld (eds.), Academic Press, New York, 1970.

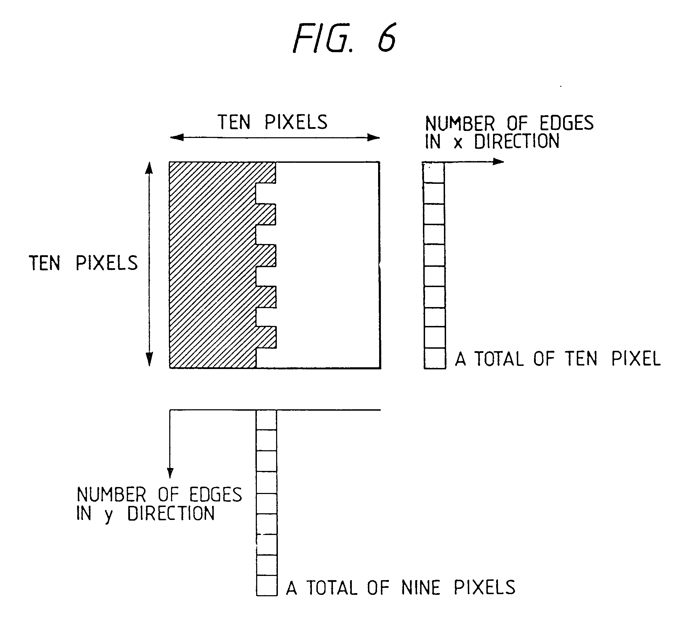

In the foregoing embodiment, the reliability of the movement vector is evaluated by the total sum of the number of edges in the x- or y-direction, but the above-mentioned evaluation function may also be applied to a horizontal or vertical scanning line in each block. The meaning of such method will be explained with reference to Fig. 6.

Fig. 6 shows an example of binary pattern, with a block size of 10 x 10 pixels, and the distributions of the number of edges in the x-and y-direction are shown by histograms illustrated outside of said pattern. The pattern shown in Fig. 6 has edges repeating in the y-direction with a short cycle, so that it is difficult to exactly detect the y-component of the movement vector. However, this pattern has 10 edges in the x-direction and 9 edges in the y-direction, so that the reliability is high in the evaluation by the total sum of the number of edges.

For such pattern, the aforementioned evaluation function may be applied to each horizontal or vertical scanning line. For a block size of n x n pixels, the number of edges present on a horizontal or vertical scanning line is between 0 and (n - 1). Therefore, the evaluation (weight) is made lower in case the number of detected edges is 0 or (n - 1) or close thereto. With this method, the y-component of the movement vector detected in this block is evaluated low.

As will be easily understood from the forgoing description, the reliability of plural detected movement vector values is evaluated by the numbers of edges detected in respective blocks, so that a movement vector of high reliability and high precision can be obtained in the entire image area or in a suitable closed area. Consequently there can be obtained satisfactory performance in the moving image encoding device or in the image vibration compensating device.

## Claims

1. An image pickup device comprising:
imaging means (12) for generating an image signal;
block dividing means (44) for dividing the image signal into plural blocks; and
movement vector detecting means (38,40) for detecting a movement vector from the image signal for each of said plural blocks, and compensating means (44,46,34) for compensating for movement of the image; and **characterised by**
filter means adapted to binary digitize the image signal by employing a predetermined threshold value to extract frequency components suitable for the detection of said movement vector by eliminating unnecessary low and high frequency components;
edge detection means (40) for detecting edge data in the output signals of said filter means in each of said plural blocks, said edge detection means being adapted to detect the number of edges in each of said blocks by counting the number of inversions of said binary digitized signal; and
weighting means (44) for varying the weighting of the movement vector value detected by said movement vector detecting means for each block based on the output of said detection means, and effecting a predetermined averaging operation thereby calculating a representative movement vector;
the compensating means (44, 46, 34) in operation compensating the movement of the image according to the movement vector for the entire image frame as calculated by said operation means.

2. A device according to claim 1, further comprising an image memory for storing the image signal, corresponding to an image frame generated by said image pickup means;
wherein said compensating means is adapted, in the read-out of image information from said image memory, to vary the read-out position from said image memory, in such a direction as to cancel the movement vector of the entire image frame released from said operation means.

3. A method of picking up an image comprising:
utilising imaging means to generate an image signal;
dividing the image signal into plural blocks; and
detecting a movement vector from the image signal for each of said plural blocks, and compensating for movement of the image; the method being **characterised by**
utilising filter means to binary digitize the image signal by employing a predetermined threshold value to extract frequency components suitable for the detection of said movement vector by eliminating unnecessary low and high frequency components;
detecting the number of edges in the output signals of said filter means in each of said plural blocks by counting the number of inversions of said binary digitised signal;
varying the weighting of the movement vector value detected by said movement vector detecting means for each block based on the output of said detection means;
effecting a predetermined averaging operation thereby calculating a representative movement vector; and
compensating the movement of the image according to the movement vector for the entire image frame as calculated.

4. A method according to claim 3, further comprising storing in an image memory the image signal, corresponding to an image frame generated by said image pickup means;
wherein said compensating step includes reading-out of image information from said image memory and varying the read-out position from said image memory in such a direction as to cancel the movement vector of the entire image frame released from said operation means.

## Patentansprüche

1. Bildaufnahmevorrichtung mit:
einer Abbildungseinrichtung (12) zum Erzeugen eines Bildsignals;
einer Blockaufteilungseinrichtung (44) zum Aufteilen des Bildsignals in eine Vielzahl von Blöcken; und
einer Bewegungsvektordetektionseinrichtung (38, 40) zum Detektieren eines Bewegungsvektors aus dem Bildsignal für jeden der Vielzahl von Blöcken, und einer Kompensationseinrichtung (44, 46, 34) zum Kompensieren einer Bewegung des Bilds; und **gekennzeichnet durch**
eine Filtereinrichtung, die zum Binärdigitalisieren des Bildsignals unter Verwendung eines vorbestimmten Schwellenwerts zum Extrahieren von für die Detektion des Bewegungsvektors geeigneten Frequenzkompönenten **durch** ein Beseitigen unnötiger Nieder- und Hochfrequenzkomponenten eingerichtet ist;
eine Kantendetektionseinrichtung (40) zum Detektieren von Kantendaten bei den Ausgangssignalen der Filtereinrichtung bei jedem der Vielzahl von Blöcken, wobei die Kantendetektionseinrichtung zum Detektieren der Anzahl von Kanten bei jedem der Blöcke **durch** ein Zählen der Anzahl von Inversionen des binärdigitalisierten Signals eingerichtet ist; und
eine Gewichtungseinrichtung (44) zum Variieren der Gewichtung des **durch** die Bewegungsvektordetektionseinrichtung detektierten Bewegungsvektorwerts für jeden Block auf der Grundlage der Ausgabe der Detektionseinrichtung und Ausführen einer vorbestimmten Durchschnittsbildungsoperation, wodurch ein repräsentativer Bewegungsvektor berechnet wird;
wobei die Kompensationseinrichtung (44, 46, 34) während des Betriebs die Bewegung des Bilds gemäß dem Bewegungsvektor für das ganze Einzelbild wie **durch** die Operationseinrichtung berechnet kompensiert.

2. Vorrichtung nach Anspruch 1, ferner mit einem Bildspeicher zum Speichern des Bildsignals entsprechend einem durch die Bildaufnahmeeinrichtung erzeugten Einzelbild;
wobei die Kompensationseinrichtung dazu eingerichtet ist, bei dem Auslesen von Bildinformationen aus dem Bildspeicher die Ausleseposition aus dem Bildspeicher in einer derartigen Richtung zu variieren, daß der von der Operationseinrichtung ausgegebene Bewegungsvektor des ganzen Einzelbilds aufgehoben wird.

3. Verfahren zum Aufnehmen eines Bilds, mit:
Verwenden einer Abbildungseinrichtung zum Erzeugen eines Bildsignals;
Aufteilen des Bildsignals in eine Vielzahl von Blöcken; und
Detektieren eines Bewegungsvektors aus dem Bildsignal für jeden der Vielzahl von Blöcken, und Kompensieren einer Bewegung des Bilds; wobei das Verfahren **gekennzeichnet ist durch**
Verwenden einer Filtereinrichtung zum Binärdigitalisieren des Bildsignals unter Verwendung eines vorbestimmten Schwellenwerts zum Extrahieren von für die Detektion des Bewegungsvektors geeigneten Frequenzkomponenten **durch** ein Beseitigen unnötiger Nieder- und Hochfrequenzkomponenten;
Detektieren der Anzahl von Kanten bei den Ausgangssignalen der Filtereinrichtung bei jedem der Vielzahl von Blöcken **durch** ein Zählen der Anzahl von Iwversionew des binärdigitalisierten Signals;
Variieren der Gewichtung des **durch** die Bewegungsvektordetektionseinrichtung detektierten Bewegungsvektorwerts für jeden Block auf der Grundlage der Ausgabe der Detektionseinrichtung;
Ausführen einer vorbestimmten Durchschnittsbildungsoperation, wodurch ein repräsentativer Bewegungsvektor berechnet wird; und
Kompensieren der Bewegung des Bilds gemäß dem Bewegungsvektor für das ganze Einzelbild wie berechnet.

4. Verfahren nach Anspruch 3, ferner mit einem Speichern des Bildsignals in einem Bildspeicher entsprechend einem durch die Bildaufnahmeeinrichtung erzeugten Einzelbild;
wobei der Kompensationsschritt ein Auslesen von Bildinformationen aus dem Bildspeicher und Variieren der Ausleseposition aus dem Bildspeicher in einer derartigen Richtung, daß der von der Operationseinrichtung ausgegebene Bewegungsvektor des ganzen Einzelbilds aufgehoben wird, umfaßt.

## Revendications

1. Dispositif capteur d'images comportant :
un moyen (12) de formation d'image destiné à générer un signal d'image ;
un moyen (44) de division par blocs destiné à diviser le signal d'image en plusieurs blocs ; et
un moyen (38, 40) de détection de vecteur mouvement destiné à détecter un vecteur mouvement à partir du signal d'image pour chacun desdits plusieurs blocs, et un moyen de compensation (44, 46, 34) destiné à compenser un mouvement de l'image ; et **caractérisé par**
un moyen à filtre conçu pour numériser sous forme binaire le signal d'image en utilisant une valeur de seuil prédéterminée afin d'extraire des composantes de fréquence convenant à la détection dudit vecteur mouvement en éliminant des composantes de fréquence inutiles basses et hautes ;
un moyen (40) de détection de bord destiné à détecter des données de bord dans les signaux de sortie dudit moyen à filtre dans chacun desdits plusieurs blocs, ledit moyen de détection de bord étant conçu pour détecter le nombre de bords dans chacun desdits blocs en comptant le nombre d'inversions dudit signal numérisé binaire ; et
un moyen de pondération (44) destiné à faire varier la pondération de la valeur du vecteur mouvement détectée par ledit moyen de détection du vecteur mouvement pour chaque bloc sur la base du signal de sortie dudit moyen de détection, et à effectuer une opération prédéterminée de calcul de moyenne, calculant ainsi un vecteur mouvement représentatif ;
le moyen de compensation (44, 46, 34), lorsqu'il fonctionne, compensant le mouvement de l'image conformément au vecteur mouvement de la trame d'image entière telle que calculée par ledit moyen d'opération.

2. Dispositif selon la revendication 1, comportant en outre une mémoire d'image destinée à stocker le signal d'image, correspondant à une trame d'image générée par ledit moyen capteur d'image ;
dans lequel ledit moyen de compensation est conçu, dans l'extraction d'une information d'image de ladite mémoire d'image, pour faire varier la position d'extraction de ladite mémoire d'image, dans une direction telle que le vecteur mouvement de la trame d'image entière libérée dudit moyen d'opération est annulé.

3. Procédé pour capter une image, comprenant :
l'utilisation de moyens de formation d'image pour générer un signal d'image ;
la division du signal d'image en plusieurs blocs ; et
la détection d'un vecteur mouvement à partir du signal d'image pour chacun desdits plusieurs blocs, et la compensation du mouvement de l'image ; le procédé étant **caractérisé par**
l'utilisation d'un moyen à filtre pour numériser sous forme binaire le signal d'image en utilisant une valeur de seuil prédéterminée afin d'extraire des composantes de fréquence convenant à la détection dudit vecteur mouvement en éliminant des composantes de fréquence inutiles basses et hautes ;
la détection du nombre de bords dans les signaux de sortie dudit moyen à filtre dans chacun desdits plusieurs blocs en comptant le nombre d'inversions dudit signal numérisé binaire ;
la variation de la pondération de la valeur du vecteur mouvement détectée par ledit moyen de détection de vecteur mouvement pour chaque bloc sur la base du signal de sortie dudit moyen de détection ;
l'exécution d'une opération prédéterminée d'établissement de moyenne afin de calculer un vecteur mouvement représentatif ; et
la compensation du mouvement de l'image en fonction du vecteur mouvement pour la trame d'image entière telle que calculée.

4. Procédé selon la revendication 3, comprenant en outre le stockage dans une mémoire d'image du signal d'image, correspondant à une trame d'image générée par ledit moyen capteur d'image ;
dans lequel ladite étape de compensation comprend l'extraction d'une information d'image de ladite mémoire d'image et la modification de la position d'extraction de ladite mémoire d'image dans une direction telle que le vecteur mouvement de la trame d'image entière libérée dudit moyen d'opération est annulé.
